# EUROPEAN PATENT APPLICATION

(11) **EP 4 814 138 A1**
(43) Date of publication of application: **30.09.2026**
(21) Application number: 23959590.3
(22) Date of filing: 20.12.2023
(51) Int. Cl.: C21D 8/12, C21D 9/46, C22C 38/02, C22C 38/04, C22C 38/06, C22C 38/00

(54) **GRAIN ORIENTED ELECTRICAL STEEL SHEET AND METHOD FOR MANUFACTURING SAME**

(30) Priority: 24.11.2023 KR 20230166083
(71) Applicant: POSCO Co., Ltd, Gyeongsangbuk-do 37859 (KR)
(72) Inventor: Park, Jong Ho, Pohang-si, Gyeongsangbuk-do 37859 (KR); Kim, Dae-Uk, Pohang-si, Gyeongsangbuk-do 37859 (KR); Kim, Wan-Yi, Pohang-si, Gyeongsangbuk-do 37859 (KR)
(74) Representative: Meissner Bolte Partnerschaft mbB
(86) International application number: PCT/KR2023/021143
(87) International publication number: WO 2025/110334

(57) **Abstract**

A method for manufacturing a grain-oriented electrical steel sheet according to an embodiment of the present invention includes: preparing a slab including, by weight, Si: 1.5 to 4.5 %, C: 0.70 % or less (excluding 0%), Mn: 1.0 % or less (excluding 0 %), the balance being Fe, and other inevitable impurity; hot rolling the slab to manufacture a hot-rolled plate; cold rolling the hot-rolled plate to manufacture a cold-rolled sheet; performing a secondary recrystallization annealing step on a primary recrystallization annealed steel sheet.

The secondary recrystallization annealing step includes a first temperature increasing step in which a temperature of the steel sheet is 650 ° C to 900 ° C and a second temperature increasing step in which the temperatre of the steel sheet exceeds 900 ° C up to a soaking temperature, and a soaking step. Forsterite is included in an amount of 2 to 15 wt% at a thickness in a range of 10 µ m from a surface of the sheel sheet to the inside of the steel sheet after the first temperature increasing step, and in an amount of 85 to 100 wt% after the second temperature increasing step.

## Description

### [Technical Field]

An embodiment of the present invention relates to a grain-oriented electrical steel sheet, and a manufacturing method thereof. Specifically, an embodiment of the present invention provides a grain-oriented electrical steel sheet and a manufacturing method thereof, in which an oxidation degree is appropriately controlled during a secondary recrystallization annealing process to reduce deviation in a forsterite particle size and a secondary recrystallized grain size in the width direction of the steel sheet, thereby reducing deviation in magnetic properties in the width direction.

### [Background Art]

A grain-oriented electrical steel sheet is a soft magnetic material having a so-called Goss texture in which the crystallographic orientation of all grains on the sheet surface is {110} and the crystallographic direction in the rolling direction is parallel to the <001> axis, thereby exhibiting excellent magnetic properties in the rolling direction of the steel sheet. In general, a magnetic property of an electrical steel sheet may be expressed in terms of magnetic flux density and iron loss, and a high magnetic flux density may be obtained by precisely aligning crystal grains in the {110}<001> orientation. An electrical steel sheet having a high magnetic flux density not only allows a reduction in the size of a core material of an electrical machine, but also reduce a hysteresis loss, thereby enabling miniaturization and improved efficiency of an electrical device. An iron loss is a power loss consumed as thermal energy when an alternating magnetic field is applied to the steel sheet, and it varies significantly depending on factors such as magnetic flux density, sheet thickness, impurity content in the steel, electrical resistivity, and the size of secondary recrystallized grains. The iron loss decreases as magnetic flux density and electrical resistivity increase and as sheet thickness and impurity content decrease, thereby improving the efficiency of electrical machines.

On a surface of such a grain-oriented electrical steel sheet, a forsterite film formed during secondary recrystallization annealing and an insulating coating applied during a final heat flattening process are provided to produce a final product. The forsterite film not only serves to provide surface insulation, but also imparts tensile stress to the steel sheet due to a difference in thermal expansion between a base metal and the film, thereby improving the iron loss and magnetostriction characteristics. The forsterite film formed on the surface of the steel sheet significantly affects not only insulation performance and magnetic property improvement, but also workability during core processing and the product appearance. Therefore, it is required to form a forsterite film having uniform and stable quality.

In order to form the forsterite film in manufacturing of the grain-oriented electrical steel, a cold-rolled steel sheet having a final thickness is decarburization-annealed in a humid atmosphere to form an oxide mainly composed of Fe₂SiO₄ and SiO₂, which play an important role in primary recrystallization and in the formation of the forsterite film. Thereafter, an annealing separator mainly composed of MgO is applied to the steel sheet and dried, followed by coiling, and then secondary recrystallization annealing is performed, whereby the forsterite film is formed.

During the secondary recrystallization annealing process, the formation reaction of the forsterite film proceeds through a reaction between MgO, which is the main component of the annealing separator, and SiO₂, which is the main component of the oxide formed during primary recrystallization annealing (2MgO + SiO₂ -> Mg₂SiO₄). When AlN is used as an inhibitor, a spinel-structured compound such as Al₂O₃, MgO, and SiO₂ is formed near a lower portion of the forsterite film

The formation behavior of the forsterite film also affects the behavior of the inhibitor such as MnS and AlN in the steel, thereby influencing the secondary recrystallization behavior, which is an essential process for obtaining an excellent magnetic property.

In other words, when the formation reaction of the forsterite film is delayed or proceeds non-uniformly, or when the amount and quality of the formed film is inappropriate, oxygen (O) and nitrogen (N) can easily penetrate into the steel during the annealing atmosphere, resulting in decomposition and coarsening of the inhibitor in the steel, thereby affecting inhibitor strength. Furthermore, the forsterite film formed during the secondary recrystallization annealing process plays a role in purifying the steel by extracting an unnecessary inhibitor, which is no longer needed after completion of secondary recrystallization, into the film, thereby reducing the hysteresis loss.

Accordingly, the uniform formation of the forsterite film and the control of its formation process are important factors that determine the quality of the grain-oriented electrical steel.

### [Disclosure]

### [Technical Problem]

An embodiment of the present invention provides a grain-oriented electrical steel sheet and a manufacturing method thereof. Specifically, an embodiment of the present invention provides a grain-oriented electrical steel sheet and a manufacturing method thereof, in which an oxidation degree is appropriately controlled during a secondary recrystallization annealing process to reduce deviation in a forsterite particle size and a secondary recrystallized grain size in a width direction of the steel sheet, thereby reducing deviation in magnetic properties in the width direction.

### [Technical Solution]

A method for manufacturing a grain-oriented electrical steel sheet according to an embodiment of the present invention includes: preparing a slab including, by weight, Si: 1.5 to 4.5 %, C: 0.70 % or less (excluding 0%), Mn: 1.0 % or less (excluding 0 %), the balance being Fe, and other inevitable impurity; hot rolling the slab to manufacture a hot-rolled plate; cold rolling the hot-rolled plate to manufacture a cold-rolled sheet; performing a secondary recrystallization annealing step on a primary recrystallization annealed steel sheet.

The secondary recrystallization annealing step includes a first temperature increasing step in which a temperature of the steel sheet is 650 °C to 900 °C and a second temperature increasing step in which the temperatre of the steel sheet exceeds 900 °C up to a soaking temperature, and a soaking step.

Forsterite is included in an amount of 2 to 15 wt% at a thickness in a range of 10 µm from a surface of the sheel sheet to the inside of the steel sheet after the first temperature increasing step, and in an amount of 85 to 100 wt% after the second temperature increasing step.

The slab may further include one or more of Al:0.015 to 0.040 wt%, N: 0.0055 wt% or less, and S: 0.0055 wt% or less.

The slab may further include one or more of Sn: 0.03 to 0.10 wt%, Sb: 0.01 to 0.05 wt%, P: 0.01 to 0.10 wt%, Cu:0.001% to 0.1 wt%, and Cr: 0.01 to 0.50 wt%.

After the primary recrystallization annealing step and before the secondary recrystallization annealing step, an annealing separator is applied, and, the annealing separator may include 100 parts by weight of MgO and 0.01 to 0.50 parts by weight of an additive having a melting point of 900°C or lower.

The additive may include one or more of a hydroxide, a carbonate, an amide compound, a chromate, an oxide, an antimony compound, a chlorine compound, a chloride oxide, a sulfur compound, a nitrogen compound, a bromide, a bromate, telluric acid, a vanadate, a borate, and a phosphorus compound.

The additive may include at least one or more of Li, F, Na, K, Cu, Ba, Br, Mg, Ca, Zn, Sr, Cd, B, Al, Y, Ga, In, Tl, Ti, Sn, P, Nb, Sb, Bi, S, Cr, Te, V, W, Fe, Mn, Co, and Ni.

The additive may include one or more of SrCl₂, Sb₂O₃, FeBr₂, CuCl, MnCl₂, B₂O₃, NiSO₄, CoSO₄, CuBr, and SnS.

A hydration moisture of MgO may be 1.2 to 2.5 wt%.

The first temperature increasing step may include 10 to 50 vol% of N₂ and 50 to 90 vol% of H₂, the second temperature increasing step may include 30 vol% or less of N₂ and 70 vol% or more of H₂, and the soaking step may include 99 vol% or more of H₂.

The first temperature increasing step may be performed at a heating rate of 5°C/hr to 90°C/hr, and the second temperature increasing step may be performed at a heating rate of 5°C/hr to 30°C/hr.

A grain-oriented electrical steel sheet according to an embodiment of the present invention includes, in wt%, C: 0.005% or less (excluding 0%), Si: 1.5 % to 4.5 %, and Mn: 1.0 % or less, with the balance being Fe and other inevitably entrained impurities, wherein a forsterite layer may be present on one or both surfaces of the steel sheet, a ratio (P₂/P₁) of an average grain size P₁ of forsterite particles present in the forsterite layer of an edge portion, which is from one end in a width direction of the steel sheet to 30 % of a total width of the steel sheet and from 70 % of the total width of the steel sheet to the other end, to an average grain size P₂ of forsterite particles present in the forsterite layer of a center portion, which is from more than 30 % to less than 70 % of the total width of the steel sheet, may be 0.8 to 1.2.

In addition, a ratio (R₂/R₁) of an average grain size R₁ of secondary recrystallization present in the edge portion to an average grain size R₂ of secondary recrystallization present in the center portion may be 0.7 to 1.2.

The grain-oriented electrical steel sheet according to an embodiment of the present invention may further include one or more of Al: 0.040 wt% or less, N:0.0050 wt% or less, and S:0.005 wt%.

The grain-oriented electrical steel sheet according to an embodiment of the present invention may further include one or more of Sn: 0.03 to 0.10 wt%, Sb: 0.01 to 0.05 wt%, P: 0.01 to 0.10 wt%, Cu:0.001% to 0.1 wt%, and Cr: 0.01 to 0.50 wt%.

The average grain size of the forsterite particles present in the forsterite layer of the edge portion may be 0.3 to 2.0 µm, and the average grain size of the forsterite particles present in the forsterite layer of the center portion may be 0.3 to 2.0 µm.

The average grain size of the secondary recrystallization present in the edge portion may be 1.0 to 4.5 cm, and the average grain size of the secondary recrystallization present in the center portion may be 0.7 to 4.0 cm.

### [Advantageous Effects]

The grain-oriented electrical steel sheet according to an embodiment of the present invention reduces deviation in magnetic properties in the width direction of the steel sheet and enables uniform improvement of magnetic properties across the width direction.

### [Description of the Drawings]

FIG. 1 is a schematic diagram of a grain-oriented electrical steel sheet according to an embodiment of the present invention.
FIG. 2 is a schematic diagram of a coil-shaped steel sheet during a secondary recrystallization annealing process according to an embodiment of the present invention.

### [Mode for Invention]

Terms such as "first," "second," and "third" may be used herein to describe various elements, components, regions, layers, and/or sections, but such elements, components, regions, layers, and/or sections should not be limited by these terms. These terms are only used to distinguish one element, component, region, layer, or section from another element, component, region, layer, or section. Accordingly, a first element, component, region, layer, or section described below may be referred to as a second element, component, region, layer, or section without departing from the scope of the present invention.

The terminology used herein is for the purpose of describing particular embodiments only and is not intended to limit the present invention. As used herein, singular forms include plural forms as well, unless the context clearly indicates otherwise. The term "comprising" as used herein specifies the presence of stated features, regions, integers, steps, operations, elements, and/or components, but does not preclude the presence or addition of one or more other features, regions, integers, steps, operations, elements, components, and/or combinations thereof.

When an element is referred to as being "on" or "over" another element, it may be directly on or over the other element, or intervening elements may be present therebetween. In contrast, when an element is referred to as being "directly on" another element, there are no intervening elements present.

Unless otherwise defined, all terms (including technical and scientific terms) used herein have the same meanings as commonly understood by one of ordinary skill in the art to which the present invention pertains. Terms defined in commonly used dictionaries should be interpreted as having meanings consistent with their meanings in the context of the relevant art and the present disclosure, and should not be interpreted in an idealized or overly formal sense unless expressly so defined herein.

Unless otherwise specified, "%" refers to weight percent, and 1 ppm corresponds to 0.0001 weight percent.

In an embodiment of the present invention, the meaning of further including an additional element means including the additional element by replacing iron (Fe), which is the balance, by the added amount of the additional element.

Hereinafter, an embodiments of the present invention will be described in detail such that those skilled in the art can easily carry out the present invention. As those skilled in the art would realize, the described embodiments may be modified in various different ways, all without departing from the spirit or scope of the present invention.

A method for manufacturing a grain-oriented electrical steel sheet according to an embodiment of the present invention includes: preparing a slab containing, by weight %, Si: 1.5 to 4.5%, C: 0.70% or less (excluding 0%), and Mn: 1.0% or less (excluding 0%), with the balance being Fe and an inevitable impurity; hot rolling the slab to produce a hot-rolled sheet; cold rolling the hot-rolled sheet to produce a cold-rolled sheet; primary recrystallization annealing of the cold-rolled sheet; and secondary recrystallization annealing of the primary recrystallization-annealed steel sheet.

Hereinafter, each step will be described in detail.

First, a slab is prepared.

The slab contains, by weight %, Si: 1.5 to 4.5%, C: 0.70% or less (excluding 0%), and Mn: 1.0% or less (excluding 0%), with the balance being Fe and an inevitable impurity.

The reason for limiting the content of each element is as follows.

### C: 0.70 wt% or less

Carbon (C) is an element that promotes austenite phase transformation, contributes to uniform hot-rolled microstructure, and facilitates the formation of Goss-oriented grains during cold rolling, thereby playing an important role in producing grain-oriented electrical steel sheet having excellent magnetic properties. When excessive carbon is added, a fine hot-rolled microstructure due to austenite transformation is formed, resulting in fine primary recrystallized grains. In addition, a coarse carbide may be formed during coiling after hot rolling or during cooling after annealing of the hot-rolled sheet, and Fe₃C (cementite) may be formed at room temperature, causing non-uniformity in the structure. Furthermore, excessive carbon increases the time required for decarburization to 30 ppm or less after cold rolling, which may lead to excessive formation of fayalite and silica on a surface of the steel sheet. Accordingly, the carbon content may be 0.70 wt% or less. Specifically, the carbon content may be 0.01 to 0.50 wt%. More specifically, the carbon content may be 0.03 to 0.10 wt%.

Carbon is removed by decarburization during primary recrystallization annealing, and in the final product, the carbon content may be 0.005 wt% or less. Specifically, the carbon content may be 0.003 wt% or les. more specifically, the the carbon content may be 0.0001 to 0.0030 wt%.

### Si:1.5 to 4.5 wt%

Silicon (Si) is a fundamental element of electrical steel and increases electrical resistivity, thereby reducing core loss (iron loss). When the content of Si is too low, resistivity decreases, resulting in insufficient reduction of an eddy current loss and insufficient formation of fayalite during decarburization, which may destabilize the formation of the forsterite film. Conversely, excessive Si increases brittleness of steel, making cold rolling difficult, and excessive fayalite formation may deteriorate surface quality. Accordingly, the content of Si may be 1.5 to 4.5 wt%

More specifically, the the content of Si may be 2.5 to 3.5 wt%.

### Mn: 1.0 wt% or less

Like Si, manganese (Mn) increases resistivity and reduces an iron loss. However, when a large amount of Mn is added, magnetic flux density is reduced and grain growth inhibition is weakened due to the formation of coarse MnS precipitates rather than providing the iron loss effect due to the increase in resistivity. It also adversely affects fayalite and silica formation during decarburization, thereby hindering proper formation of the forsterite film.

Accordingly, in order to form a forsterite film having excellent adhesion along with superior magnetic flux density characteristics, it is necessary to optimize the Mn content. However, when Mn is excessively added, coarse MnS precipitates are promoted, and in order to dissolve such MnS precipitates, a problem arises in that the slab needs to be heated to a temperature of 1150 °C or higher. In addition, excessive Mn may hinder the formation of high-quality fayalite and silica during the decarburization process. Therefore, the content of Mn may be 1.0 wt% or less. More specifically, the content of Mn may be 0.1 to 0.5 wt%.

The slab may further include one or more of Al: 0.015 to 0.040 wt%, N: 0.0055 wt% or less, and S: 0.0055 wt% or less.

### Al: 0.015 to 0.040 wt%

An aluminum (Al) forms an AIN precipitate with nitrogen N, and serves as a representative element of grain growth inhibitor for forming secondary recrystallization of the grain-oriented electrical steel sheet. In an embodiment of the present invention, an (Al,Si,Mn)N precipitate is formed through nitriding annealing after cold rolling, thereby securing a grain growth inhinition effect. In particular, a deviation in magnetic properties in a width direction of the steel sheet is reduced by controlling precipitation of the precipitate in the width direction. In the steelmaking stage, it is preferable to add Al in an amount of 0.015 to 0.040 wt%, and when Al is added in an excessively small amount, a total amount of the (Al,Si,Mn)N precipitate formed during primary recrystallization and nitriding annealing may be insufficient, resulting in inadequate inhibition of primary recrystallized grain growth. On the contrary, when Al is added in an excessively large amount, the precipitate may grow coarsely during slab manufacturing and hot rolling processes, thereby forming a coarse microstructure during nitriding annealing, which may destabilize the formation of secondary recrystallization in the subsequent secondary recrystallization annealing process. Accordingly, the content of Al in the slab may be 0.015 to 0.040 wt%. More specifically, the content of AI may be 0.020 to 0.035 wt%.

During the secondary recrystallization annealing process, a portion of Al may be removed through purification annealing, and in the final grain-oriented electrical steel, Al may be included in an amount of 0.040 wt% or less. More specifically, the content of AI may be 0.010 to 0.040 wt%.

### N: 0.0055 wt% or less

Nitrogen (N) is an important element that reacts with AI to form the AIN precipitate that inhibuits grain growth. In a manufaucturing method in which the (Al,Si,Mn)N precipitate is secured through nitridization after cold rolling 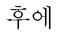 nitride 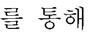 (Al,Si,Mn)N deposition 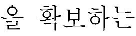 manufacturing method, it is not necessary to contain a large amount of N in the steelmaking step. However, when N is added in an excessively small amount, a fine AlN precipitate may be formed during the slab preparing step, resulting in refinement of the primary recrystallized grain and facilitating secondary recrystallization of grains having an exact Goss orientation. On the contrary, when N is added in an excessively large amount, a coarse AIN precipitate may be formed during the slap manufacturing state, resulting in a coarse primary recrystallized microstructure and thereby destabilizing secondary recrystallization. Accordingly, a content range of N may be limited to 0.0055 wt% or less. Specifically, the content of N may be 0.0010 to 0.0050 wt%. More specifically, the content of N may be 0.0030 to 0.0050 wt%.

Meanwhile, in an embodiment of the present invention, nitridng may be performed during the primary recrystallization annealing process, and thereafter, a portion of N may be removed through purification annealing during the secondary recrystallization annealing process. In the final grain-oriented electrical steel sheet, N may be included in an amount of 0.0050 wt% or less. More specifically, the content of N may be 0.001 to 0.005 wt%.

### S: 0.0055 wt% or less

Sulfur (S) generally reacts with Mn and Cu to form an MnS or Cu₂S precipitate, thereby serving as an inhibitor that suppresses the growth of the primary recrystallized grain. In order to secure a fine MnS precipitate, the added Mn and S needs to be completely dissolved under slab heating conditions of 1150°C or lower such that they can effectively function as inhibitors. Accordingly, it is preferable that S is added within a range that can react with the added Mn. When S is added in an excessive amount, complete dissolution becomes difficult, resulting in the formation of a coarse MsN precipitate. In addition, S is an element that readily segregates at a grain boundary or on a surface. In particular, during high-temperature annealing, S may diffuse to the surface of the steel sheet and cause surface segregation, thereby interfering with the reaction between fayalite and silica with MgO to form a forsterite film, and consequently deteriorating the adhesion of the forsterite film. Accordingly, S may be included in an amount of 0.0055 wt% or less. Specifially, S may be included in an amount of 0.001 to 0.005 wt%. More specifically, S may be included in an amount of 0.0020 to 0.0045 wt%. During the secondary recrystallization annealing process, a portion of S may be removed through purification annealing, and in the final grain-oriented electrical steel sheet, S may be included in an amount of 0.005 wt% or less. Specifically, S may be included in an amount of 0.001 to 0.005 wt%.

The slab may further include one or more of Sn: 0.03 to 0.10 wt%, Sb: 0.01 to 0.05 wt%, P: 0.01 to 0.10 wt%, Cu:0.001% to 0.1 wt%, and Cr: 0.01 to 0.50 wt%.

### Sn: 0.03 to 0.10 wt%

Tin (Sn) is an auxiliary grain growth inhibitor that exhibits an excellent effect of segregating at a grain boundary and impending grain boundry migration. This compensates for weakening of the grain growth inhibition effect caused by coarsening of an AlN particle and an increase in Si content. Accordingly, even with a relatively high Si content, successful formation of a {110}<001> secondary recrystallization texture can be ensured. That is, it is possible not only to increase the content of Si but also to reduce the final thickness without deteriorating the completeness of the {110}<001> secondary recrystallization structure. Therefore, when Sn is additionally included, it may act advantageously in terms of magnetic properties. When Sn is added in an insufficient amount, the above-described effect may not be sufficiently obtained. On the contrary, when Sn is added in an excessive amount, brittleness may increase. Accordingly, when Sn is further added, an amount of 0.03 to 0.10 wt% may be further added. Specifically, an amount of 0.04 to 0.07 wt% may be further added.

### Sb: 0.01 to 0.05 wt%

Antimony (Sb) segregates at a grain boundary and acts to suppress excessive growth of the primary recrystallized grain. Accordingly, when Sb is additionally included, it may act advantageously in terms of magnetic properties. When Sb is added in an insufficient amount, the above-described effect may not be sufficiently obtained. On the contrary, when Sb is added in an excessive amount, the size of the primary recrystallized grain may become excessively small, thereby lowering a secondary recrystallization initiation temperature and deteriorating magnetic properties, or the inhibition force against growth may becom excessively strong, resulting in a failure of secondary recrystallization. Accordingly, Sb may be further included in an amount of 0.01 to 0.05 wt%. Specifically, Sb may be further included in an amount of 0.015 to 0.035 wt%.

### P:0.01% to 0.10 wt%

Phosphorus (P) promotes the growth of the primary recrystallized grain and thus increases a secondary recrystallization temperature, thereby enhancing the accumulation of the {110}<001> orientation in a final product. Although an excessively large primary recrystallized grain may destabilize secondary recrystallization, as long as secondary recrystallization occurs, a larger primary recrystallized grain is advantageous for magnetic properties in order to increase the secondary recrystallization temperature. Meanwhile, P increases the number of grains having the {110}<001> orientation in a primary recrystallized steel sheet, thereby reducing an iron loss in the final product. In addition, P strongly develops a {111}<112> texture in the primary recrystallized sheet, thereby improving the accumulation of the {110}<001> orientation in the final product and consequently increasing magnetic flux density. Further, P segregates at a grain boundary up to a high temperature of about 1000°C during secondary recrystallization annealing, thereby delaying the decomposition of a precipitate and reinforcing the inhibition effect. Accordingly, when P is additionally included, it may act advantageously in terms of magnetic properties. When P is added in an insufficient amount, the above-described effect may not be sufficiently obtained. Conversely, when P is added in an excessive amount, the size of the primary recrystallized grain may rather decrease, thereby destabilizing secondary recrystallization, and brittleness may increase, thereby deteriorating cold rollability. Accordingly, P may be further included in an amount of 0.01 to 0.10 wt%. Specifically, P may be further included in an amount of 0.015 to 0.050 wt%.

### Cu: 0.001 to 0.1 wt%

Copper (Cu) reacts with sulfur (S) to form a Cu₂S precipitate and acts as an inhibitor that suppresses the growth of the primary recrystallized grain. When added together with Mn, it forms an [MnCu]S composite precipitate, thereby affecting the size of an MnS precipitate. When Cu is added in an insufficient amount, the formation of the Cu₂S precipitate is insufficient, resulting in a reduced inhibition effect. Conversely, when Cu is added in an excessive amount, it may preferentially precipitate with S before Mn in the steel, making it difficult to obtain a fine MnS precipitate intended in the present invention. Accordingly, the Cu content is preferably limited to 0.001 to 0.100 wt%. Specifically, Cu may be included in an amount of 0.010 to 0.070 wt%.

### Cr: 0.01 to 0.50 wt%

Chromium (Cr) is an element that reacts most readily with oxygen to form Cr₂O₃ on a surface of the steel sheet. Through this, carbon in the steel rapidly diffuses to the surface of the steel sheet and reacts with oxygen in the atmosphere to form CO gas, thereby promoting decarburization. When Cr is added in an insufficient amount, the above-described effects may not be sufficiently obtained. Conversely, when Cr is added in an excessive amount, it may not significantly affect the formation of the surface oxide layer. Accordingly, the Cr content is preferably limited to 0.01 to 0.50 wt%. Specifically, Cr may be included in an amount of 0.03 to 0.30 wt%.

The balance includes iron (Fe). In addition, an inevitable impurity may be included. The inevitable impurity refers to an impurity that is inevitably incorporated during steelmaking and the manufacturing process of grain-oriented electrical steel. Since the inevitable impurity is well known, a detailed description thereof is omitted. In an embodiment of the present invention, the addition of elements other than the above-described alloy components is not excluded, and various elements may be included within a range that does not depart from the technical spirit of the present invention. When an additional element is included, it replaces a corresponding amount of Fe. For example, at least one element selected from Ni, Mo, Zr, Bi, Pb, As, Ge, and Ga may be included in the steel within the scope of the present invention.

Back to the description of the manufacturing process, the slab is heated to a temperature of 1150 °C or lower. The slab may be produced by an ingot casting method, a continuous casting method, a thin slap casting method, or strip casting. In the case of the ingot casting method, continuous casting, or thin slab casting, the slab is first manufactured, and thereafter slab heating and hot rolling are performed in subsequent processes.

The slab heating is based on a method for manufacturing grain-oriented electrical steel sheet in which an (Al,Si,Mn)N precipitate, serving as the main grain growth inhibitor required for Gross-oriented secondary recrystallization, is secured through decarburization and nitriding annealing after cold rolling. Accordingly, the slab may be heated to 1150 °C or lower and then subjected to hot rolling. In such slab heating and hot rolling processes, in order to properly form fine MnS as an auxiliary grain growth inhibitor, the contents of Mn and S are controlled at the steelmaking stage such that a dissolution temperature of the MnS precipitate formed by the reaction of Mn and S does not exceed 1150°C.

When the slab is heated at an excessively high temperature, an AlN precipitate formed during a solidification process in the slab manufacturing stage may be excessively dissolved during the slab heating stage and subsequently finely re-precipitated during the hot rolling process, and this refines the grain size during hot rolling and decarburization, thereby hindering the formation of secondary recrystallization of grains having an exact Goss orientation. Although a slab heating temperature is preferably as low as possible within a range in which the MnS precipitate can be completely dissolved depending on the contents of Mn and S, in consideration of the hot rolling load, the slab may be heated at a temperature of 1000°C to 1150°C.

Next, the slab is hot-rolled to manufacture a hot-rolled sheet.

The hot rolling may be performed to a thickness of 1.0 to 3.5 mm, and in consideration of rolling load, the rolling may be finished at a temperature of 850 °C or higher, followed by cooling to a temperature of 600 °C or lower and coiling.

The hot-rolled steel sheet may recrystallize a deformed structure hot-rolled during a hot-rolled sheet annealing process, thereby facilitating rolling to a final product thickness in a cold rolling process, which is a post-process. In general, the hot-rolled sheet annealing temperature is preferably 800°C or higher and maintained for a predetermined time for recrystallization, and annealing at multiple temperatures may be employed to control the distribution and size of precipitates. The hot rolled sheet annealing may be omitted if necessary.

Next, the hot-rolled sheet is cold-rolled to manufacture a cold-rolled sheet.

The hot-rolled sheet is subjected to pickling to remove an oxide layer on the surface of the steel sheet, and then cold rolled is carried out. The cold rolling is a process or reducing a thickness of the steel sheet to the final product thickness, and may be performed once or multiple times including intermediate annealing. In this case, a cold rolling ratio may be 80 % or more, since it enhances the accumulation of the Goss orientation and thus effects the improvement of magnetic flux density after secondary recrystallization annealing. When the cold rolling ratio is too low, the accumulation of the Goss orientation decreases, resulting in a reduction in magnetic flux density of the final product. Accordingly, the cold rolling rate is preferably 80 % or more, and the maximum reduction ratio may be determined within the capability of the rolling equipment. In addition, when a sheet temperature of the cold-rolled steel sheet is increased to 50 °C or higher during the cold rolling process, work hardening due to dissolved carbon is promoted, thereby increasing the number of secondary recrystallization nuclei having the Goss orientation and improving the magnetic flux density of the final product. When the temperature of the cold-rolled sheet is too low, the formation of Goss-oriented secondary recrystallization nuclei is insufficient, whereas when it exceeds 300 °C, the work hardening effect due to dissolved carbon is weakened, resulting in a reduction in the formation of Goss-oriented secondary recrystallization nuclei. Accordingly, during the cold rolling process, the steel sheet may be maintained at a temperature of 50 to 300 °C at least once during an intermediate rolling stage. After cold rolling, a thickness of the cold-rolled sheet may be 0.10 to 0.35 mm.

Next, the cold-rolled sheet is subjected to primary recrystallization annealing.

A temperature of the primary recrystallization annealing may be 800 to 950 °C. When the annealing temperature of the steel sheet is too low, decarburization and nitriding may require excessive time, and it may difficult to properly form a metal oxide layer. When the annealing temperature is too high, a primary crystallized grain may grow excessively coase, reducing the driving force for grain growth and thereby preventing stable secondary recrystallization. The annealing time is not particularly limited in achieving the effects of the present invention, but, in consideration of productivity, it may be performed for 5 minutes or less.

During the primary recrystallization annealing process, decarburization and nitriding may be performed. The decarburization and nitriding may be carried out sequentially (for example, decarburization followed by nitriding or nitriding followed by decarburization) or simultaneously.

Nitriding may be carried out by supplying a nitriding gas as an atmosphere gas during the primary recrystallization annealing process. The nitriding gas may include ammonia gas. Through nitriding, nitrogen ions may be introduced into the steel sheet, thereby facilitating the precipitation of an inhibitor such as (Al,Si,Mn)N, AlN, and the like.

After nitriding, the nitrogen content in the steel sheet may be 0.0120 to 0.0280 wt%. When the content of nitrogen is too low, it may be difficult for the inhibitor to sufficiently function until the initiation of secondary recrystallization. When the content of nitrogen is too high, excessive formation of nitrides may occur, which may hinder normal secondary recrystallization and may also cause a film defect such as a bare spot due to N₂ gas decomposed a purification process after the formation of the secondary recrystallization. Specifically, the content of nitrogen in the steel sheet may be 0.0150 to 0.0250 wt%.

The nitriding gas is not particularly limited as long as it is capable of introducing nitrogen into the steel sheet. Specifically, ammonia or nitrogen may be used. In an ammonia atmosphere, nitriding may be performed through heat treatment, whereas in a nitrogen atmosphere, nitriding may be performed through laser or plasma treatment.

The primary recrystallization annealing may be performed in an atmosphere having an oxidation degree (PH₂O/PH₂) of 0.45 to 0.80, thereby enabling decarburization by discharging carbon in the steel sheet to the outside. When the oxidation degree is too low, oxidation or decarburization may not sufficiently occur. When the oxidation degree is too high, an unstable oxide such as FeO may be rapidly formed at the outermost surface layer. Specifically, the oxidation degree may be 0.48 to 0.75.

After then primary recrystallization annealing, an oxide layer having an average thickness of 1.6 to 3.2 µm may exist on the surface of the steel sheet. The oxide layer is formed near the surface of the steel sheet due to decarburization during the primary recrystallization annealing. The oxide layer refers to a portion where the oxygen content changes abruptly. When a thickness of the oxide layer is too thin, non-uniformity in magnetic proterties may increase. When the thickness of the oxide layer is too thick, a metal oxide layer becomes excessively thick and a thickness of the base material is relatively reduced, which may deteriorate the magnetic properties.

After the primary recrystallization annealing and before the secondary recrystallization annealing, applying an annealing separator may be further included. In an embodiment of the present invention, an annealing separator including a low-melting-point additive is used such that a particle size of forsterite may be uniformly formed. The low-melting-point additive implies an additive having a melting point of 900 °C or lower. Such an additive prevents additional oxidation and nitriding of the steel sheet during the secondary recrystallization annealing process and enables uniform formation of the forsterite particle size in a width direction of the steel sheet. Specifically, the low-melting-point additive may have a melting point of 750 °C.

Specifically, the additive may include one or more of hydroxide, carbonate, an amide compound, chromate, oxide, an antimony compound, a chlorine compound, oxychloride, a sulfur compound, a nitrogen compound, bromide, bromate, tellurats, vanadats, borats, and a phosphorus compound.

In addition, the additive may include one or more of Li, F, Na, K, Cu, Ba, Br, Mg, Ca, Zn, Sr, Cd, B, Al, Y, Ga, In, Tl, Ti, Sn, P, Nb, Sb, Bi, S, Cr, Te, V, W, Fe, Mn, Co, and Ni.

As an example, the additive may include one or more of SrCl₂, Sb₂O₃, FeBr₂, CuCl, MnCl₂, B₂O₃, NiSO₄, CoSO₄, CuBr, and SnS.

The additive may be included in an amount of 0.01 to 0.50 parts by weight based on 100 parts by weight of MgO 100. The term, "parts by weight" refers to the relative weight ratio of each component and is measured based on solid content after removing all moisture. When the amount of the low-melting-point additive is too small, it may be difficult to sufficiently obtain the effects of forming a low-melting hyaline layer and promoting the formation of the forsterite film. When the amount of the low-melting-point additive is too large, a pinhole-shape local melting defect may occur. Specifically, the additive may be included in an amount of 0.05 to 0,30 parts by weight.

The annealing separator includes 100 parts by weight of MgO. MgO may exist in the form of Mg(OH)₂ in the presence of water, and in an embodiment of the present invention, MgO is interpreted as including MgO together with Mg(OH)₂, and the content of MgO may be understood as the total amount of MgO and Mg(OH)₂.

The hydration water content of MgO may be 1.2 to 2.5 wt%. The hydration water also helps, together with the low-melting-point additive described above, to uniformly form the particle size of forsterite in the width direction of the steel sheet. When the hydration water content is too low, insufficient moisture is present for a semi-wet atmosphere between steel sheets, resulting in a thinner forsterite thim at a center portion in the width direction and non-uniformity formation of forsterite particles. Meanwhile, when the hydration water is too high, excessive moisture between the steel sheets may lead to excessive oxidation at an edge portion, thereby increasing an oxidation-related detect. Specficially, the hydration water contect of MgO may be 1.5 to 2.3 wt%. The hydration water content of MgO refers to the total amount of moisture remaining in the steel sheet and moisture present in the form of Mg(OH)₂ after a slurry is prepared by mixing MgO powder with pure water at about 12°C or lower, applied to the steel sheet, and then dried. The hydration water of MgO may be defined by a difference between a weight MgO by sampling a small amount of MgO from the dried steel sheet and measuring its weight and a weight of MgO measured after heat treatment at 1000 °C for one hour.

The annealing separatpr may further include a ceramic powder such as TiO₂, SiO₂, Al₂O₃, and the like in addition to MgO and the low-melting-point additive. When one or more of TiO₂, SiO₂, and Al₂O₃ is further included, it may be included in an amount of 1 to 10 parts by weight based on 100 parts by weight of MgO.

Next, the primary recrystallization annealed steel sheet is subjected to secondary recrystallization annealing.

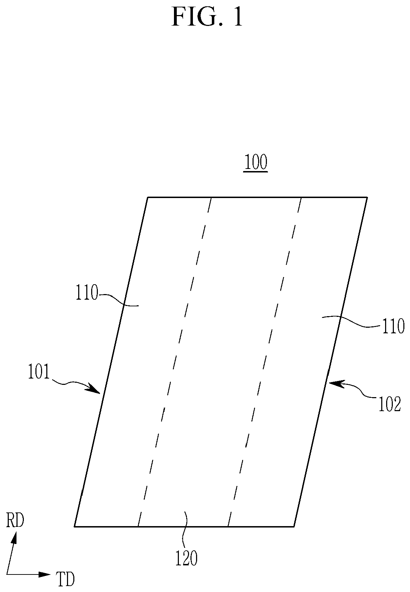

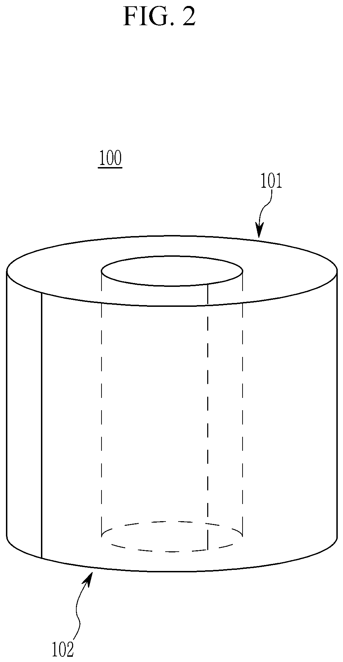

During the secondary recrystallization annealing, the steel sheet is wound in a coil shape and annealed for a long period of time. FIG. 1 schematically illustrates a steel sheet according to an embodiment of the present invention, and FIG. 2 schematically illustrates a steel sheet wound in a coil shape.

One end 101 in FIG. 1 corresponds to an upper end 101 of a coil, and the other end 102 in FIG. 2 corresponds to a lower end 102 of the coil. Edge portions 110 adjacent to the upper end 101 and the lower end 102 of the coil directly exposed to air of an external atmosphere, and thus are excessively oxidized compared to a center portion 120 inside the coil, resulting in nonuniform particle size of forsterite between the edge portion 110 and the center portion 120.

In an embodiment of the present invention, the particle size of forsterite between the edge portion 110 and the center portion 120 may be uniformly formed by varying atmosphere conditions according to the thermal history of the steel sheet during the secondary recrystallization annealing. Such uniformly formed forsterite particles also influence secondary recrystallization, thereby enabling uniform grain size in the secondary recrystallization.

Specifically, the secondary recrystallization annealing includes a first termperature increasing step in which the temperature of the steel sheet is 650 °C to 900 °C, a second temperature increasing step in which the temperature of the steel sheet exceeds 900 °C up to a soaking temperature, and cracing step, and atmosphere conditions of each step are controlled.

Hereinafter, each step will be described in detail.

First, the steel sheet is heated through the first temperature increasing step in which the temperature of the steel sheet is 650 °C to 900 °C. In the first temperature increasing step, an oxide layer formed on a surface of the steel sheet during the primary recrystallization annealing process is prepared in a state suitable for reaction with MgO. The first temperature-raising stage is performed in an atmosphere having an oxidation degree (PH₂O/PH₂) of 0.05 to 0.40. When the oxidation degree is too low, the oxide layer may not properly react with MgO in a subsequent step, and reduction of an Fe-based oxide may occur, making it difficult for a forsterite particle to sufficiently grow, particularly in the center portion 120. On the contrary, when the oxidation degree is too high, an olivine-and pyroxene-phase oxide increases in a surface of the oxide layer of the edge portion 110, which interferes with the reaction with MgO and hinders sufficient growth of the forsterite particle. More specifically, the first temperature increasing step may be performed in an atmosphere having an oxidation degree (PH₂O/PH₂) of 0.10 to 0.25. The oxidation degree may have a decreasing tendency as the temperature increases, and the oxidation degree of the first temperature increasing step refers to an average oxidation degree over the entire duration of the step.

The first temperature step may include 10 to 50 vol% of N₂ and 50 to 90 volume% of H₂. When the amount of N₂ is too small, decomposition of an inhibitor may proceed too rapidly, resulting in deterioration of magnetic properties. When the amount of N₂ is too large, it may be difficult to uniformly control the oxidation degree within the steel sheet, and additional nitriding may occur, affecting the forsterite film and the magnetic properties. More specifically, the first temperature increasing step may include 20 to 40 vol% of N₂ and 60 to 80 vol% of H₂.

The first temperature rising step may be operated at a heating rate of 5 °C/hr to 90 °C/hr. When the heating rate is too high, temperature deviation within the wound coil may become excessive and may impose a burden on the equipment, and thus should be avoided, and when the heating rate is too low, productivity issues may arise. More specifically, the heating rate may be 10°C/hr to 75°C/hr.

After the first temperature increasing step, forsterite may be included in an amount of 2 to 15 wt% within a depth of 10 µm from the surface toward the interior of the steel sheet. Forsterite may be properly formed by appropriately controlling the above-described oxidation degree (PH₂O/PH₂). When the amount of forsterite is too small, sufficient growth of the forsterite particle in the center portion 120 may be difficult. When the amount is too large, sufficient growth of the forsterite particle in the edge portion 110 may be difficult. The total amount of forsterite may be measured by X-ray quantitative analysis.

Next, the steel sheet is heated through the second temperature increasing step in which the steel sheet temperature exceeds 900°C up to a soaking temperature. In the second temperature increasing step, the oxide layer on the surface of the steel sheet begins to react with MgO in earnest, and removal reactions of inhibitors occur. The second temperature increasing step is performed in an atmosphere having an oxidation degree (PH₂O/PH₂) of 0.03 or less. When the oxidation degree is too high, olivine- and pyroxene-phase oxides increase in the surface oxide layer of the edge portion (110), which interferes with the reaction with MgO and makes it difficult for forsterite particles to sufficiently grow. More specifically, the oxidation degree (PH₂O/PH₂) in the second stage may be 0.01 to 0.03.

The second temperature increasing step may include 30 vol% or less of N₂ and 70 vol% or more of H₂. When the amount of N₂ is too high, it may be difficult to uniformly control the oxidation degree within the steel sheet, and additional nitriding may occur, thereby affecting the forsterite film and magnetic properties. More specifically, the second temperature increasing step may include 10 to 30 vol% of N₂ and 70 to 90 vol% of H₂.

The second temperature increasing step may be performed at a heating rate of 5 °C/hr to 30 °C/hr. When the heating rate of the second temperature increasing step is too high, temperature deviation within the wound coil may occur, resulting in deviations not only in magnetic properties but also in surface properties and thus needs to be limited, and when the the heating rate is too low, productivity may decrease thus needs to be limited. More specifically, the heating rate of the second temperature increasing step may be 8 °C/hr to 25 °C/hr.

After the second temperature increasing step, forsterite may be included in an amount of 85 to 100 wt% within a thickness of 10 µm from the surface toward the interior of the steel sheet. The above-stated forsterite may be properly formed by appropriately controlling the oxidation degree (PH₂O/PH₂).

Next, a soaking step in which the steel sheet is soaked at a soaking temperature is included. The soaking temperature may be 1000 °C or more, and specifically 1170 to 1220 °C. In the soaking step, formation of the forsterite film is completed, secondary recrystallization growth occurs, and an inhibitor is removed. The oxidation degree (PH₂O/PH₂) in the soaking step may be maintained at less than 0.03. In addition, removal of the inhibitor and an impurity may be smoothly achieved by including 99 vol% or more of H₂. The soaking step may be performed for 1 to 25 hours.

After the secondary recrystallization annealing, an unreacted annealing separator may be removed by water washing, followed by pickling, application of an insulating coating, annealing of the insulating coating, and heat flattening treatment including shape correction and stress relief annealing.

The grain-oriented electrical steel sheet according to an embodiment of the present invention includes, by weight %, C: 0.005% or less (excluding 0%), Si: 1.5% to 4.5%, and Mn: 1.0% or less, with the balance being Fe and other inevitably entrained impurities.

Since the composition of the grain-oriented electrical steel sheet has been described above with respect to the slab composition in the manufacturing method, redundant descriptions are omitted.

As described above, in the manufacturing method of grain-oriented electrical steel sheet, deviation in the particle size of forsterite in the width direction of the steel sheet may be reduced by applying different oxidation degrees during the temperature increasing process in the secondary recrystallization annealing.

Specifically, a ratio (P₂/P₁) of an average grain size P₁ of forsterite grains present in a forsterite layer of the edge portion 110 from one end in a width direction of the steel sheet to 30 % of a total width of the steel sheet from the one end of the steel sheet and from 70 % of the total width of the steel sheet from the one end of the steel sheet to the other end thereof, to an average grain size P₂ of forsterite grains present in a forsterite layer of the center portion 120 exceeding 30 % to less than 70 % of the total width of the steel sheet from the one end of the steel sheet, may be 0.8 to 1.2.

The term "forsterite particle" refers to a particle of a crystalline oxide mainly composed of Mg₂SiO₄ formed during the secondary recrystallization annealing process. The average particle size of forsterite may be obtained by measuring a particle size of forsterite within a corresponding forsterite layer using at least 15 samples taken in a cross-section along a transverse direction TD with respect to corresponding regions of the edge portion 110 and the center portion 120. More specifically, the forsterite particle size may be measured by taking the corresponding sample and processing a cross section using a focused ion beam device (from Carl Zeiss) and observing the forsterite film using a transmission electron microscope (from JEOL). Thereafter, the forsterite particle size may be measured using an image analyzer (from Leica). However, the method for measuring the forsterite particle is not limited thereto.

The ratio (P₂/P₁) of an average grain size P₁ of forsterite grains present in a forsterite layer of the edge portion 110 from one end in a width direction of the steel sheet to 30 % of a total width of the steel sheet from the one end of the steel sheet and from 70 % of the total width of the steel sheet from the one end of the steel sheet to the other end thereof, to an average grain size P₂ of forsterite grains present in a forsterite layer of the center portion 120 exceeding 30 % to less than 70 % of the total width of the steel sheet from the one end of the steel sheet is too small or large, it means that a grain size of the forsterite grains is not uniform between the edge portion 110 and the center portion 120, which also affects a grain size of secondary recrystallization below the forsterite layer, the grain size of the secondary recrystallization is not uniformly formed, and magnetic deviation occurs in the width direction. Specifically, the ratio (P₂/P₁) of the average grain size P₁ of the forsterite grains present in the forsterite layer of the edge portion 110 from one end in a width direction of the steel sheet to 30 % of the total width of the steel sheet from the one end of the steel sheet and from 70 % of the total width of the steel sheet from the one end of the steel sheet to the other end thereof, to the average grain size P₂ of the forsterite grains present in the forsterite layer of the center portion 120 exceeding 30 % to less than 70 % of the total width of the steel sheet from the one end of the steel sheet, may be 0.85 to 1.15.

As described above, in one embodiment of the present invention, since the average grain size ratio (P₂/P₁) of the forsterite grains is uniform, a grain size of secondary recrystallization between the edge portion 110 and the center portion 120 may also be uniformly formed. Specifically, a ratio (R₂/R₁) of an average grain size R₁ of secondary recrystallization present in the edge portion 110 from the one end in the width direction of the steel sheet to 30 % of the total width of the steel sheet from the one end of the steel sheet and from 70 % of the total width of the steel sheet from the one end of the steel sheet to the other end thereof, to an average grain size R₂ of secondary recrystallization present in the center portion 120 exceeding 30 % to less than 70 % of the total width of the steel sheet from the one end of the steel sheet may be 0.7 to 1.2. More specifically, the average grain size ratio (R₂/R₁) of the secondary recrystallization may be 0.80 to 1.10.

The secondary recrystallization grain size may be measured in a manner based on the American Society for Testing and Materials (ASTM) grain size test method after completely removing the insulation coating and the forsterite film from the grain-oriented electrical steel sheet for which the secondary recrystallization annealing has been completed.

An average grain size of forsterite grains present in the forsterite layer of the edge portion 110 is 0.3 to 2.0 µm, and an average grain size of forsterite grains present in the forsterite layer of the center portion 120 is 0.3 to 2.0 µm.

In addition, an average grain size of the secondary recrystallization present in the edge portion 110 may be 1.0 to 4.5 cm, and an average grain size of the secondary recrystallization present in the center portion 120 may be 0.7 to 4.0 cm.

The grain-oriented electrical steel sheet according to an embodiment of the present invention is excellent in iron loss and magnetic flux density, and at the same time, has very small deviations in iron loss and magnetic flux density in the width direction.

In the grain-oriented electrical steel sheet according to an embodiment of the present invention, a magnetic flux density B₈ may be 1.90 T or more, and an iron loss W_{17/50} may be 0.90 W/kg or less. In this case, the magnetic flux density B₈ is a magnitude (Tesla) of magnetic flux density induced under a magnetic field of 800 A/m, and the iron loss W_{17/50} is a magnitude (W/kg) of iron loss induced under conditions of 1.7 Tesla and 50 Hz. More specifically, the magnetic flux density B₈ may be 1.91 T to 1.95 T, and the iron loss W_{17/50} may be 0.75 to 0.85 W/kg.

In the grain-oriented electrical steel sheet according to an embodiment of the present invention, in a width of 1050 mm or more, a ratio (center portion/edge portion) of the iron loss W_{17/50} of the center portion to the edge portion may be 0.98 to 1.2.

In addition, a ratio (center portion/edge portion) of the magnetic flux density B₈ of the center portion to the edge portion may be 0.98 to 1.00. Deviation of the iron loss and the magnetic flux density may be obtained through an average value of samples by collecting 10 or more samples from each part.

In addition, forsterite film adhesion is also excellent. The adhesion may be measured as a minimum circular arc diameter at which no film peeling occurs when bent by 180 ° in contact with a circular arc of a specific diameter. Specifically, the forsterite film adhesion may be 20 mmΦ or less.

Hereinafter, a detailed embodiment of the present invention will be described. However, the following embodiment is only a specific embodiment of the present invention, and the present invention is not limited thereto.

### Experimental Example 1

A slab including, in weight%, C: 0.060%, Si: 3.3 %, Mn: 0.090 %, Al: 0.028 %, Sb: 0.04 %, Cu: 0.02 %, and Sn: 0.05 %, with the balance being Fe and an unavoidable impurity, was prepared, and the slab was heated to a temperature of 1150 °C, hot-rolled to a thickness of 2.3 mm, and then quenched to 600 °C and coiled. The hot-rolled sheet was subjected to hot-rolled sheet annealing at 1080°C, pickled, and then subjected to strong cold rolling once to a thickness of 0.20 mm. The cold-rolled sheet was maintained at 850 °C for 180 seconds in a humid atmosphere of 50 v% hydrogen and 50 v% nitrogen and an ammonia mixed gas atmosphere, and was subjected to simultaneous decarburization and nitriding annealing heat treatment such that a carbon content was 30 ppm or less and a total nitrogen content was 200 ppm or more. An annealing separator including 100 parts by weight of MgO having a hydration moisture of 1.75 wt%, 5 parts by weight of TiO₂, 0.15 parts by weight of SrCl₂, 0.10 parts by weight of Sb₂O₃, and 0.05 parts by weight of FeBr₂ was stirred at a water temperature of 8 °C to form a slurry, which was applied to the steel sheet at a rate of 6.0 g/m2 per side in terms of weight after drying, dried, and then coiled.

After the first heating step (steel sheet temperature 900 °C) and after the second heating step, results of quantifying forsterite (Mg₂SiO₄) using XRD after extracting the steel sheet are summarized in Table 1 below.

Secondary recrystallization annealing was performed by heating in the atmosphere summarized in Table 1 below and performing soaking at 1200 °C for 6 hours in 100 v% H₂, and then a solution containing Al phosphate and colloidal silica as main components as insulation coating components was applied in a continuous line, followed by annealing at 850 °C.

For the finally manufactured grain-oriented electrical steel sheet, 20 specimens each was collected by shearing to an Epstein specimen size [60 mm (width) X 300 mm (length)] at each of an edge portion and a center portion, and then the average grain size of forsterite, a secondary recrystallized grain size, magnetic flux density B₈, and core loss W_{17/50} were measured and summarized in Table 2 and Table 3 below.

The average grain size of forsterite was measured by processing a cross section using a focused ion beam from Carl Zeiss, measuring the forsterite film with a transmission electron microscope from JEOL, and then using an image analyzer from Leica.

The secondary recrystallized grain size was measured for the specimen after completion of secondary recrystallization annealing based on an ASTM grain size test method after completely removing the insulation coating and the forsterite film with hydrochloric acid.

Results of evaluating the adhesion of the forsterite film are shown in Table 3. The adhesion was measured as the minimum arc diameter at which no film peeling occurred when bent 180 ° in contact with an arc having a diameter of 10 to 50 mm.

Deviations in core loss and magnetic flux density were calculated as center portion/edge portion.

**(Table 1)**

| | First heating step | | | | Second heating step | | | |
|---|---|---|---|---|---|---|---|---|
| | Oxidation degree (P_{H2O}/ P_{H2}) | Nitrogen (volume%) | Heating rate (°C/hr) | Forsterite amount (wt%) | Oxidation degree (P_{H2O}/ P_{H2}) | Nitrogen (volume%) | Heating rate (°C/hr) | Forsterite amount (wt%) |
| Example 1 | 0.15 | 25 | 15 | 5.2 | 0.02 | 25 | 20 | 98 |
| Example 2 | 0.10 | 15 | 20 | 2.8 | 0.02 | 25 | 20 | 94 |
| Example 3 | 0.25 | 25 | 20 | 7.3 | 0.02 | 25 | 20 | 96 |
| Example 4 | 0.05 | 25 | 10 | 3.4 | 0.02 | 25 | 20 | 88 |
| Example 5 | 0.35 | 40 | 15 | 12.5 | 0.02 | 25 | 20 | 94 |
| Comparative Example 1 | 0.01 | 25 | 20 | 0.1 | 0.02 | 25 | 20 | 81 |
| Comparative Example 2 | 0.50 | 75 | 25 | 22.7 | 0.02 | 25 | 20 | 95 |
| Comparative Example 3 | 0.20 | 25 | 100 | 0.1 | 0.02 | 25 | 20 | 83 |
| embodiment 6 | 0.15 | 25 | 75 | 5.2 | 0.01 | 25 | 15 | 94 |
| embodiment 7 | 0.15 | 25 | 75 | 5.2 | 0.03 | 25 | 15 | 96 |
| embodiment 8 | 0.15 | 25 | 75 | 5.2 | 0.02 | 25 | 25 | 89 |
| embodiment 9 | 0.25 | 25 | 75 | 7.3 | 0.02 | 25 | 10 | 98 |
| embodiment 10 | 0.25 | 25 | 75 | 7.3 | 0.02 | 40 | 10 | 95 |
| embodiment 11 | 0.25 | 25 | 75 | 7.3 | 0.03 | 50 | 25 | 93 |
| Comparative Example 4 | 0.15 | 25 | 75 | 5.2 | 0.30 | 25 | 15 | 90 |
| Comparative Example 5 | 0.15 | 25 | 75 | 5.2 | 0.03 | 25 | 100 | 76 |
| Comparative Example 6 | 0.25 | 25 | 75 | 7.3 | 0.03 | 75 | 20 | 95 |

**(Table 2)**

| | Forsterite average particle size | | | Secondary recrystallization average particle size | | |
|---|---|---|---|---|---|---|
| | Edge portion (P₁, µm) | Center portion (P₂, µm) | P₂/ P₁ | Edge portion (R₁, cm) | Center portion (R₂, cm) | R₂/ R₁ |
| Example 1 | 0.68 | 0.65 | 0.96 | 1.89 | 1.68 | 0.89 |
| Example 2 | 0.58 | 0.53 | 1.09 | 2.18 | 2.02 | 0.93 |
| Example 3 | 0.76 | 0.88 | 1.16 | 1.58 | 1.54 | 0.97 |
| Example 4 | 0.44 | 0.38 | 0.86 | 2.43 | 2.20 | 0.91 |
| Example 5 | 1.05 | 0.95 | 0.91 | 2.05 | 1.83 | 0.89 |
| Comparative Example 1 | 0.15 | 0.22 | 1.47 | 5.80 | 3.94 | 0.68 |
| Comparative Example 2 | 2.52 | 1.85 | 0.73 | 0.04 | 0.04 | 0.61 |
| Comparative Example 3 | 0.13 | 0.16 | 1.23 | 4.85 | 3.29 | 0.68 |
| embodiment 6 | 0.68 | 0.62 | 0.91 | 2.74 | 2.62 | 0.96 |
| embodiment 7 | 0.83 | 0.75 | 0.90 | 1.66 | 1.48 | 0.89 |
| embodiment 8 | 0.56 | 0.45 | 0.82 | 3.08 | 2.44 | 0.79 |
| embodiment 9 | 0.80 | 0.78 | 0.98 | 1.73 | 1.48 | 0.86 |
| embodiment 10 | 0.94 | 0.81 | 0.86 | 2.67 | 2.26 | 0.85 |
| embodiment 11 | 1.10 | 0.98 | 0.89 | 2.83 | 2.16 | 0.76 |
| Comparative Example 4 | 3.45 | 2.52 | 0.73 | 6.87 | 5.42 | 0.79 |
| Comparative Example 5 | 0.52 | 0.27 | 0.52 | 3.02 | 1.21 | 0.40 |
| Comparative Example 6 | 1.34 | 0.84 | 0.63 | 7.66 | 6.32 | 0.83 |

**(Table 3)**

| Iron loss (W_{17/50}, W/kg) | | | | Magnetic flux density (B₈, T) | | | |
|---|---|---|---|---|---|---|---|
| | Edge portion | Centerportion | Deviation | Edge portion | Center portion | Deviation | Close contacting property(mm) |
| Example 1 | 0.64 | 0.65 | 1.02 | 1.93 | 1.93 | 1.00 | 15 |
| Example 2 | 0.63 | 0.65 | 1.03 | 1.94 | 1.93 | 0.99 | 18 |
| Example 3 | 0.66 | 0.67 | 1.02 | 1.93 | 1.92 | 0.99 | 15 |
| Example 4 | 0.63 | 0.65 | 1.03 | 1.94 | 1.93 | 0.99 | 17 |
| Example 5 | 0.70 | 0.69 | 0.99 | 1.91 | 1.91 | 1.00 | 20 |
| Comparative Example 1 | 0.92 | 0.88 | 0.96 | 1.88 | 1.89 | 1.01 | 45 |
| Comparative Example 2 | 1.05 | 1.04 | 0.99 | 1.86 | 1.86 | 1.00 | 40 |
| Comparative Example 3 | 0.92 | 0.90 | 0.98 | 1.87 | 1.87 | 1.00 | 35 |
| embodiment 6 | 0.75 | 1.02 | 1.36 | 1.90 | 1.85 | 0.97 | 45 |
| embodiment 7 | 0.72 | 0.82 | 1.14 | 1.92 | 1.90 | 0.99 | 32 |
| embodiment 8 | 0.78 | 0.93 | 1.19 | 1.91 | 1.87 | 0.98 | 45 |
| embodiment 9 | 0.64 | 0.64 | 1.00 | 1.93 | 1.93 | 1.00 | 15 |
| embodiment 10 | 0.68 | 0.69 | 1.01 | 1.91 | 1.91 | 1.00 | 20 |
| embodiment 11 | 0.71 | 0.70 | 0.99 | 1.91 | 1.90 | 0.99 | 20 |
| Comparative Example 4 | 0.88 | 0.91 | 1.03 | 1.89 | 1.87 | 0.99 | 32 |
| Comparative Example 5 | 0.88 | 0.85 | 0.97 | 1.88 | 1.89 | 1.01 | 35 |
| Comparative Example 6 | 0.86 | 0.87 | 1.01 | 1.87 | 1.87 | 1.00 | 37 |

As shown in Table to Table 3, it can be confirmed that, when the atmosphere conditions are properly controlled during heating and soaking in the secondary recrystallization annealing process, the forsterite average particle size and the secondary recrystallization particle size are uniformly formed, magnetic properties are excellent, and deviation in magnetic properties in the width direction is reduced.

In contrast, it can be confirmed that, when the atmosphere conditions during the heating step and the soaking step are not properly controlled, the average particle size of forsterite is non-uniformly formed and deviation in magnetic properties in the width direction is large.

### Experimental Example 2

The same procedure as in Example 1 was performed, except that the annealing separator was changed as shown in Table 4. With respect to the finally manufactured grain-oriented electrical steel sheet, 20 specimens each was collected by shearing to an Epstein specimen size [60 mm (width) X 300 mm (length)] at each of an edge portion and a center portion, and then an average grain size of forsterite, a secondary recrystallization grain size, magnetic flux density B₈, and core loss W_{17/50} were measured and summarized in Table 5 and Table 6 below.

**(Table 4)**

| | Hydration water (wt%) | Low-melting point additive (parts by weight) | | | |
|---|---|---|---|---|---|
| | | Additive-1 | Additive-2 | Additive-3 | Additive-4 |
| Example 12 | 1.75 | SrCl₂ 0.15 | Sb₂O₃ 0.10 | FeBr₂ 0.05 | - |
| Example 13 | 1.75 | Sb₂O₃ 0.15 | CuCl 0.05 | - | - |
| Example 14 | 1.80 | MnCl₂ 0.05 | B₂O₃ 0.05 | NiSO₄ 0.15 | CoSO₄ 0.05 |
| Example 15 | 1.46 | MnCl₂ 0.10 | CoSO₄ 0.05 | CuBr 0.15 | - |
| Example 16 | 2.31 | SrCl₂ 0.10 | Sb₂O₃ 0.20 | SnS 0.15 | - |
| Example 17 | 1.82 | SrCl₂ 0.10 | CoSO₄ 0.20 | NiSO₄ 0.05 | - |
| Comparative Example 7 | 1.75 | - | - | - | - |
| Comparative Example 8 | 1.91 | MnCl₂ 0.15 | B₂O₃ 0.30 | NiSO₄ 0.25 | - |
| Comparative Example 9 | 1.13 | SrCl₂ 0.15 | Sb₂O₃ 0.10 | - | - |
| Comparative Example 10 | 2.95 | SrCl₂ 0.15 | Sb₂O₃ 0.10 | - | - |

**(Table 5)**

| | Forsterite average particle size | | | Secondary recrystallization average particle size | | |
|---|---|---|---|---|---|---|
| | Edge portion (P₁, µm) | Center portion (P₂,µm) | P₂/P₁ | Edge portion (R₁, cm) | Center portion (R₂, cm) | R₂/R₁ |
| Example 12 | 0.66 | 0.60 | 0.91 | 2.32 | 1.80 | 0.78 |
| Example 13 | 0.61 | 0.52 | 0.85 | 1.56 | 1.52 | 0.97 |
| Example 14 | 0.52 | 0.58 | 1.12 | 1.28 | 1.12 | 0.88 |
| Example 15 | 0.54 | 0.55 | 1.02 | 1.36 | 1.40 | 1.03 |
| Example 16 | 0.65 | 0.73 | 1.12 | 2.64 | 2.08 | 0.79 |
| Example 17 | 0.73 | 0.81 | 1.11 | 2.20 | 1.76 | 0.80 |
| Comparative Example 7 | 0.46 | 0.29 | 0.63 | 6.08 | 3.52 | 0.58 |
| Comparative Example 8 | 0.58 | 0.92 | 1.59 | 5.00 | 2.68 | 0.54 |
| Comparative Example 9 | 0.38 | 0.23 | 0.61 | 6.68 | 4.08 | 0.61 |
| Comparative Example 10 | 1.52 | 0.99 | 0.65 | 3.64 | 5.00 | 1.37 |

**(Table 6)**

| | Iron loss (W_{17/50}, W/kg) | | | Magnetic flux density (B₈, T) | | | Close contacting property (mm) |
|---|---|---|---|---|---|---|---|
| | Edge portion (P₁) | Center portion (P₂) | Deviation (P₂/P₁) | Edge portion (P₁) | Center portion (P₂) | Deviation (P₂/P₁) | |
| Example 12 | 0.65 | 0.67 | 1.03 | 1.93 | 1.92 | 0.99 | 16 |
| Example 13 | 0.67 | 0.68 | 1.02 | 1.93 | 1.92 | 0.99 | 18 |
| Example 14 | 0.63 | 0.65 | 1.03 | 1.94 | 1.93 | 1.00 | 15 |
| Example 15 | 0.65 | 0.66 | 1.02 | 1.93 | 1.92 | 0.99 | 15 |
| Example 16 | 0.66 | 0.69 | 1.05 | 1.92 | 1.91 | 1.00 | 17 |
| Example 17 | 0.65 | 0.67 | 1.03 | 1.93 | 1.93 | 1.00 | 17 |
| Comparative Example 7 | 0.80 | 0.81 | 1.01 | 1.91 | 1.88 | 0.98 | 40 |
| Comparative Example 8 | 0.75 | 1.02 | 1.36 | 1.90 | 1.85 | 0.97 | 45 |
| Comparative Example 9 | 0.72 | 0.82 | 1.14 | 1.92 | 1.90 | 0.99 | 32 |
| Comparative Example 10 | 0.78 | 0.93 | 1.19 | 1.91 | 1.87 | 0.98 | 45 |

As may be confirmed in Tables 4 to 6, it may be confirmed that the addition range of the low-melting-point additive proposed in the present invention and the characteristics of the hydration water in the annealing separator affect the improvement of the uniformity of the average grain size of forsterite and secondary recrystallization.

The present invention is not limited to the above-described embodiments and/or examples and may be manufactured in various different forms, and a person of ordinary skill in the art to which the present invention pertains will be able to understand that the present invention may be practiced in other specific forms without changing the technical spirit or essential features of the present invention. Therefore, it should be understood that the embodiments and/or examples described above are illustrative in all respects and not restrictive..

**[Description of symbol]**

| | | | |
|---|---|---|---|
| 100: | grain-oriented electrical steel sheet, | 101: | one end |
| 102: | the other end | 110: | edge portion |
| 120: | center portion | | |

## Claims

1. A method for manufacturing a grain-orinted electrical steel sheet comprising:
manufacturing a slab including, by weight, Si: 1.5 to 4.5 %, C: 0.70 % or less (excluding 0%), Mn: 1.0 % or less (excluding 0 %), the balance being Fe, and other inevitable impurity;
hot rolling the slab to manufacture a hot-rolled plate;
cold rolling the hot-rolled plate to manufacture a cold-rolled sheet;
performing a primary recrystallization annealing step on the cold-rolled sheet; and
performing a secondary recrystallization annealing step on a primary recrystallization annealed steel sheet,
wherein the secondary recrystallization annealing step comprises,
a first temperature increasing step in which a temperature of the steel sheet is 650 °C to 900 °C and a second temperature increasing step in which the temperatre of the steel sheet exceeds 900 °C up to a soaking temperature, and a soaking step,
forsterite is included in an amount of 2 to 15 wt% at a thickness in a range of 10 µm from a surface of the sheel sheet to the inside of the steel sheet after the first temperature increasing step, and in an amount of 85 to 100 wt% after the second temperature increasing step.

2. The method for manufacturing the grain-orinted electrical steel sheet of claim 1, wherein:
the slab further comprises one or more of Al:0.015 to 0.040 wt%, N: 0.0055 wt% or less, and S: 0.0055 wt% or less.

3. The method for manufacturing the grain-orinted electrical steel sheet of claim 1, wherein:
the slab further comprises one or more of Sn: 0.03 to 0.10 wt%, Sb: 0.01 to 0.05 wt%, P: 0.01 to 0.10 wt%, Cu:0.001% to 0.1 wt%, and Cr: 0.01 to 0.50 wt%.

4. The method for manufacturing the grain-orinted electrical steel sheet of claim 1, wherein:
after the primary recrystallization annealing step and before the secondary recrystallization annealing step, an annealing separator is applied, and
the annealing separator comprises 100 parts by weight of MgO and 0.01 to 0.50 parts by weight of an additive having a melting point of 900°C or lower.

5. The method for manufacturing the grain-orinted electrical steel sheet of claim 4, wherein:
the additive comprises one or more of a hydroxide, a carbonate, an amide compound, a chromate, an oxide, an antimony compound, a chlorine compound, a chloride oxide, a sulfur compound, a nitrogen compound, a bromide, a bromate, telluric acid, a vanadate, a borate, and a phosphorus compound.

6. The method for manufacturing the grain-orinted electrical steel sheet of claim 4, wherein:
the additive comprises at least one or more of Li, F, Na, K, Cu, Ba, Br, Mg, Ca, Zn, Sr, Cd, B, Al, Y, Ga, In, Tl, Ti, Sn, P, Nb, Sb, Bi, S, Cr, Te, V, W, Fe, Mn, Co, and Ni.

7. The method for manufacturing the grain-orinted electrical steel sheet of claim 4, wherein:
the additive comprises one or more of SrCl₂, Sb₂O₃, FeBr₂, CuCl, MnCl₂, B₂O₃, NiSO₄, CoSO₄, CuBr, and SnS.

8. The method for manufacturing the grain-orinted electrical steel sheet of claim 4, wherein:
a hydration moisture of the MgO is 1.2 to 2.5 wt%.

9. The method for manufacturing the grain-orinted electrical steel sheet of claim 1, wherein:
the first temperature increasing step comprises 10 to 50 vol% of N₂ and 50 to 90 vol% of H₂, the second temperature increasing step comprises 30 vol% or less of N₂ and 70 vol% or more of H₂, and the soaking comprises 99 vol% or more of H₂.

10. The method for manufacturing the grain-orinted electrical steel sheet of claim 1, wherein:
the first temperature increasing step is performed at a heating rate of 5°C/hr to 90°C/hr, and the second temperature increasing step is performed at a heating rate of 5°C/hr to 30°C/hr.

11. A grain-oriented electrical steel sheet comprising, in wt%, C: 0.005% or less (excluding 0%), Si: 1.5 % to 4.5 %, and Mn: 1.0 % or less, with the balance being Fe and other inevitably entrained impurities,
wherein a forsterite layer is present on one or both surfaces of the steel sheet,
a ratio (P₂/P₁) of an average grain size P₁ of forsterite particles present in the forsterite layer of an edge portion, which is from one end in a width direction of the steel sheet to 30 % of a total width of the steel sheet and from 70 % of the total width of the steel sheet to the other end, to an average grain size P₂ of forsterite particles present in the forsterite layer of a center portion, which is from more than 30 % to less than 70 % of the total width of the steel sheet, is 0.8 to 1.2, and
a ratio (R₂/R₁) of an average grain size R₁ of secondary recrystallization present in the edge portion to an average grain size R₂ of secondary recrystallization present in the center portion is 0.7 to 1.2.

12. The grain-oriented electrical steel sheet of claim 11, further comprising one or more of Al: 0.040 wt% or less, N:0.0050 wt% or less, and S:0.005 wt%.

13. The grain-oriented electrical steel sheet of claim 11, further comprising one or more of Sn: 0.03 to 0.10 wt%, Sb: 0.01 to 0.05 wt%, P: 0.01 to 0.10 wt%, Cu:0.001% to 0.1 wt%, and Cr: 0.01 to 0.50 wt%.

14. The grain-oriented electrical steel sheet of claim 11, wherein:
the average grain size of the forsterite particles present in the forsterite layer of the edge portion is 0.3 to 2.0 µm, and the average grain size of the forsterite particles present in the forsterite layer of the center portion is 0.3 to 2.0 µm.

15. The grain-oriented electrical steel sheet of claim 11, wherein:
the average grain size of the secondary recrystallization present in the edge portion is 1.0 to 4.5 cm, and the average grain size of the secondary recrystallization present in the center portion is 0.7 to 4.0 cm.
